## Europäisches Patentamt
## European Patent Office
## Office européen des brevets

(11) Veröffentlichungsnummer: **0 008 605**
**B1**

(12) **EUROPÄISCHE PATENTSCHRIFT**

(45) Veröffentlichungstag der Patentschrift:
14.10.81

(51) Int. Cl.³: **C 04 B 13/24**, C 08 L 27/06

(21) Anmeldenummer: **79101551.4**

(22) Anmeldetag: **22.05.79**

(54) Zusatzmittel zur Herstellung porenarmer, kunststoffhaltiger, hydraulisch abbindender Massen und seine Verwendung.

(30) Priorität: **23.05.78 DE 2822357**

(43) Veröffentlichungstag der Anmeldung:
**19.03.80 Patentblatt 80/6**

(45) Bekanntmachung des Hinweises auf die Patenterteilung:
**14.10.81 Patentblatt 81/41**

(84) Benannte Vertragsstaaten:
**BE CH DE FR GB IT NL SE**

(56) Entgegenhaltungen:
**DE-A-1 471 180**
**DE-A-1 671 279**
**DE-A-2 403 444**
**DE-B-2 048 847**
**DE-C-1 256 136**
**US-A-3 043 790**
**US-A-3 833 530**
**US-A-4 086 200**

(73) Patentinhaber: **WACKER-CHEMIE GMBH,
Prinzregentenstrasse 22, D-8000 München 22 (DE)**

(72) Erfinder: **Eck, Herbert, Dr.,Dipl.-Chem., Burg 17,
D-8263 Burghausen (DE)**
Erfinder: **Kirst, Paul-Gerhard, Dr. Dipl.-Chem.,
Hermann-Hiller-Strasse 1, D-8263 Burghausen (DE)**
Erfinder: **Lechner, Wilhelm, Gartenweg 9,
D-8263 Burghausen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

0 008 605

### Zusatzmittel zur Herstellung porenarmer, kunststoffhaltiger, hydraulisch abbindenden Massen und seine Verwendung

Beim Zumischen von Kunststoffdispersionen zu Beton und Mörtelmassen kommt es aufgrund des Emulgatorgehaltes der Kunststoffdispersionen häufig zu Schaumbildung. Die in das Gemisch eingebrachte Luft kann nicht mehr entweichen, wodurch die Endfestigkeit des abgebundenen Materials infolge des hohen Luftporengehaltes vermindert wird. Aus diesem Grunde werden den zu vermischenden Massen Entschäumer zugegeben. Als solche werden Gemische von Anlagerungsprodukten des Ethylenoxids an Alkylphenole, Fettalkohole, Fettamine oder Fettsäuren genannt. Diese Entschäumer erreichen auch bei hohen Zugabemengen nur geringe Wirksamkeit. Andere bekannte Entschäumer sind beispielsweise tertiäre Ester der o-Phosphorsäure, die aufgrund ihrer chemischen Konstitutionen jedoch giftig sind.

Die US-A-3 833 530 beschreibt wäßrige Dispersionen von Copolymerisaten des Vinylchlorids mit Alkylacrylaten, Maleinsäure, Itakonsäure, Vinylestern gesättigter Carbonsäuren und/oder Ethylen als Zusatzmittel für Mörtel, denen zusätzlich anionische Emulgatoren und Antischaummittel, z. B. Fettalkohole, siliconhaltige Stoffe und Polyethylenoxidderivate, zugesetzt werden.

In der DE-A-2 403 444 werden als Entschäumer Gemische auf der Basis oxalkylierter, 12 bis 22 Kohlenstoffatome enthaltender Fettalkohole und Oxalkylierungsprodukte anderer Stoffe mit solchen oxalkylierten Fettalkoholen beschrieben, die durch Anlagerung von Propylenoxid an die Fettalkohole hergestellt wurden. Die mit diesen Entschäumern hergestellten Dispersionen sind zwar gut lagerstabil, aber der Entschäumer büßt nach mechanischer Beanspruchung, d. h. bei längeren Mischzeiten der Dispersion oder des noch nicht abgebundenen Mörtels oder Betons stark an seiner Wirkung ein.

Die DE-A-1 471 100 beschreibt als Entschäumer schließlich eine Dimethylpolysiloxankieselsäureaerogelemulsion, die ebenfalls nach mechanischer Beanspruchung ihre Wirksamkeit wesentlich einbüßt.

Aufgabe der Erfindung war es somit, Zusatzmittel zur Erzeugung kunststoffhaltiger, porenarmer, hydraulisch abbindender Massen zu finden, deren Luftporengehalt auch bei längerer mechanischer Beanspruchung niedrig bleibt.

Gegenstand der Erfindung ist ein Zusatzmittel zur Herstellung von porenarmen, kunststoffhaltigen, hydraulisch abbindenden Massen, bestehend aus wäßriger Kunststoffdispersion und Entschäumer auf Basis von Polysiloxan und flammhydrolysiertem Siliciumdioxid, das dadurch gekennzeichnet ist, daß das Zusatzmittel eine Mischung ist aus

a) wäßrigen Copolymerdispersionen mit einem Feststoffgehalt zwischen 30 und 65 Gew.-% und einer Glasübergangstemperatur des Harzes zwischen −10 und +40°C bei einem K-Wert von 35 bis 80, wobei die Copolymerdispersionen aus Monomereinheiten von Vinylchlorid und Vinylacetat und einem oder mehreren weiteren Monomeren aus der Gruppe Ethylen, Vinylester verzweigter oder unverzweigter Carbonsäuren mit 8 bis 18 Kohlenstoffatomen, Acrylester mit aliphatischen Alkoholen mit 3 bis 8 Kohlenstoffatomen durch radikalische Polymerisation in Gegenwart üblicher Schutzkolloide in Mengen von 1,5 bis 5 Gew.-% und nichtionogener Emulgatoren in Mengen von 0 bis 3 Gew.-%, jeweils bezogen auf Dispersion, hergestellt wurden, und
b) 0,3 bis 3 Gew.-%, bezogen auf Dispersion, Entschäumer, bestehend aus

    5 bis 50 Teilen  eines Dimethylpolysiloxans mit 50 bis 1000 mPa · s,
    1 bis 10 Teilen  flammhydrolysiertem Siliciumdioxid sowie
    50 bis 95 Teilen  eines Ethylenoxid-Propylenoxid-Blockcopolymeren mit einem Molekulargewicht von 500 bis 10 000 und 10 bis 60 Gew.-% Ethylenoxid im Blockcopolymeren (hierbei ergänzen sich Polysiloxan und Blockcopolymer zu 100 Teilen),

wobei Entschäumer und Copolymerdispersion vor der Zugabe zum hydraulisch abbindenden Material miteinander vermischt werden.

Ein weiterer Gegenstand der Erfindung ist die Verwendung des Zusatzmittels nach Anspruch 1 in Mengen von 1 bis 50 Gew.-%, bezogen auf das hydraulische Bindemittel, in hydraulisch abbindenden Massen.

Überraschenderweise wird es durch die erfindungsgemäße Verwendung des Zusatzmittels möglich, hydraulisch abbindende, kunststoffhaltige Massen herzustellen, die einen geringeren Luftporengehalt aufweisen, als es nach dem Stand der Technik auch nach längerem Mischen bisher möglich war. Zudem sind die im Zusatzmittel enthaltenen Komponenten vergleichsweise ungiftig, das Zusatzmittel ist sehr gut lagerstabil.

Die im Zusatzmittel verwendeten Copolymerdispersionen werden im wesentlichen aus Vinylchlorid und Vinylacetat und einem weiteren damit copolymerisierbaren Monomeren aus der Gruppe Ethylen, Vinylester verzweigter oder unverzweigter Carbonsäuren mit 8 bis 18 Kohlenstoffatomen, wie z. B. Vinyllaurat, Vinylester von Versatic®-Säuren mit 9 bis 11 bzw. 15 bis 18 Kohlenstoffatomen bzw. Gemischen von tertiären aliphatischen Carbonsäuren und Isononansäurevinylester, Acrylester mit aliphatischen Alkoholen mit 2 bis 8 Kohlenstoffatomen, wie z. B. n-Propyl-, n-Butyl- und

2

0 008 605

Ethylhexylacrylat hergestellt. Die Polymerisation wird unter Rühren in Gegenwart von Schutzkolloiden und gegebenenfalls nichtionogenen Emulgatoren unter Verwendung freie Radikale bildender Katalysatoren durchgeführt. Als Schutzkolloide eignen sich vollständig oder teilweise hydrolysiertes wasserlösliches Polyvinylacetat, Polyvinylpyrrolidon oder auch Zellulosederivate. Die Schutzkolloide werden in Mengen von 1,5 bis 5 Gew.-%, vorzugsweise 2 bis 4 Gew.-%, bezogen auf Dispersion, eingesetzt. Beim verseiften Polyvinylacetat werden Produkte mit einer Verseifungszahl von 20 bis 220 und einer Höppler-Viskosität zwischen 3 und 40 mPa · s, vorzugsweise zwischen 4 und 30 mPa · s (der 4prozentigen wäßrigen Lösung bei 20°), eingesetzt. Als nichtionogene Emulgatoren eignen sich Ether oder Ester von Fettalkoholen bzw. Fettsäuren mit Polyethylenglykol. Sie können in Mengen bis zu 3 Gew.-%, bezogen auf die Dispersion, eingesetzt werden. Geeignet sind ferner die Ether von Alkylphenolen, wie z. B. Nonylphenol mit Polyethylenglykol, und langkettige Fettsäuremonoester von mehrwertigen Alkoholen, z. B. Sorbitmonoleat und Fettsäurealkanolamide.

Freie Radikale bildende Katalysatoren sind hinreichend bekannt. Sie können aus Einzelverbindungen bestehen oder mehrere Verbindungen enthalten, die in Kombination als System wirksam sind und wasser- oder öllöslich sein können. Geeignet sind z. B. die organischen und anorganischen Peroxide, Persulfate, Dialkylpercarbonate, Azoverbindungen und Redoxsysteme, z. B. Kalium- oder Ammoniumpersulfat/Natriummetabisulfit und/oder Formaldehydnatriumsulfoxylat.

Im Katalysatorsystem können auch Aktivatoren für den Katalysator eingesetzt werden. Hierzu eignen sich z. B. Spuren von Übergangsmetallsalzen, z. B. Eisen(II)-sulfat. Auch Kettenüberträger können im Polymerisationsprozeß nützlich sein. Dafür eignen sich langkettige, in Wasser unlösliche aliphatische Mercaptane, wie z. B. n- oder tert.-Dodecylmercaptan. Zur Erhöhung des Molekulargewichts können difunktionelle Monomere, z. B. Divinylsuccinat, Glykoldimethacrylat, Allylmethacrylat, Triallylcyanurat in Mengen bis zu 0,5 Gew.-%, vorzugsweise bis zu 0,2 Gew.-%, bezogen auf die Dispersion, eingesetzt werden.

Die Herstellungsbedingungen unterscheiden sich nicht von denen, die heute bei entsprechenden Copolymerisationen wäßriger Dispersionen angewandt werden. Man arbeitet je nach dem eingesetzten Katalysatorsystem zwischen 0 und 90°C, unter anderem aus Wirtschaftlichkeitsgründen vorzugsweise zwischen 20 und 90°C. Bei ethylenhaltigen Dispersionen ist wegen der sonst erforderlichen hohen Drücke die Polymerisationstemperatur nicht über 55°C. Der Ethylendruck liegt, je nach der gewünschten Harzzusammensetzung und der angewandten Temperatur, zwischen 3,9 bar und 148,1 bar.

Eine typische Dispersion weist folgende Harzzusammensetzung auf:

20 bis 80 Gew.-%, vorzugsweise 20 bis 70 Gew.-%, Vinylchlorid, 5 bis 75 Gew.-%, vorzugsweise 10 bis 75 Gew.-%, Vinylacetat und 5 bis 30 Gew.-%, vorzugsweise 5 bis 25 Gew.-%, Ethylen oder 10 bis 60 Gew.-%, vorzugsweise 20 bis 50 Gew.-%, eines anderen mit Vinylchlorid und Vinylacetat copolymerisierbaren Monomeren, wie z. B. Vinylester verzweigter oder unverzweigter Carbonsäuren mit 8 bis 18 Kohlenstoffatomen, Acrylester mit aliphatischen Alkoholen mit 3 bis 8 Kohlenstoffatomen.

1,5 bis 5 Gew.-%, vorzugsweise 2 bis 4 Gew.-%, bezogen auf die Dispersion, eines Polyvinylalkohols als Schutzkolloid und 0 bis 3 Gew.-%, bezogen auf die Dispersion, eines nichtionogenen Emulgators.

Der fertigen Dispersion werden nach der Polymerisation 0,3 bis 3 Gew.-%, vorzugsweise 0,5 bis 2 Gew.-%, bezogen auf die Dispersion, einer Mischung aus

5 bis 50 Teilen eines Dimethylpolysiloxanes mit einer Viskosität von 50 bis 1000 mPa · s,
1 bis 10 Teilen, vorzugsweise 2 bis 8 Teilen, flammhydrolysiertem Siliciumdioxid sowie
50 bis 95 Teilen eines Polyethylenoxid-Polypropylenoxid-Blockcopolymeren mit einem Molekulargewicht von 500 bis 10 000, vorzugsweise 1000 bis 6000, und 10 bis 60 Gew.-%, vorzugsweise 15 bis 45 Gew.-%, Ethylenoxideinheiten im Blockcopolymeren, wobei sich Polysiloxan und Blockcopolymer zu 100 Teilen ergänzen,

zugegeben. Die Gesamtmenge des Dimethylpolysiloxans im fertigen Zusatzmittel für hydraulisch abbindende Massen soll zwischen 0,03 bis 0,5 Gew.-%, vorzugsweise 0,05 bis 0,3 Gew.-%, bezogen auf die Dispersion, aufweisen. Das Polyethylenoxid-Polypropylenoxid-Blockcopolymere soll zu mindestens 0,3 Gew.-%, vorzugsweise 0,5 bis 2 Gew.-%, bezogen auf die Dispersion, im fertigen Zusatzmittel enthalten sein.

Das Zusatzmittel, bestehend aus Dispersion und Entschäumer, wird dem hydraulischen Bindemittel in einer Menge von 1 bis 50 Gew.-%, vorzugsweise 10 bis 40 Gew.-%, bezogen auf Zement oder auf das hydraulische Bindemittel im Beton oder Mörtel, zugegeben. Unter Beton und Mörtelmischungen sollen auch Kalk- und Gipsmörtel ohne Zementgehalt verstanden werden.

Die im Entschäumer enthaltenen Dimethylpolysiloxane bzw. das flammhydrolysierte Siliciumoxid sowie das Polyethylenoxid-Polypropylenoxid-Blockcopolymere ist im Handel erhältlich. Speziell die Ethylenoxid-Propylenoxid-Blockcopolymeren können außer Hydroxylendgruppen auch mit anderen Endgruppen, wie z. B. Methyl-, Ethyl-, Propyl- oder Acetylgruppen, abgesättigt sein. Entscheidend ist es für die Wirksamkeit des Zusatzmittels auf die hydraulisch abbindenden Massen, daß die Entschäumerkombination mit der Dispersion vor der Zugabe zur hydraulisch abbindenden Masse zur Dispersion gemischt wird. Die dabei resultierenden Zusatzmittel sind gut lagerstabil. Eine getrennte

3

Zugabe der Polymerdispersion und der Entschäumerkombination zum hydraulisch abbindenden Mittel bewirkt eine wesentlich geringere porenerniedrigende Wirkung in der hydraulisch abbindenden Masse.

Beispiele 1 bis 25

Allgemeine Herstellungsmethode der Dispersionen für die Beispiele 1 bis 25

In das vorgelegte Wasser wurden die Polyvinylalkohollösung, gegebenenfalls der nichtionogene Emulgator (Isotridecanol mit 15 Ethylenoxideinheiten verethert) das gesamte Oxidationsmittel (Kaliumpersulfat ca. 0,3% auf Dispersion) sowie eine geringe Menge Ferroammonsulfat (ca. $0,4 \cdot 10^{-3}$%) eingerührt bzw. gelöst. Der pH-Wert wurde mit Ameisensäure auf 3 bis 3,5 eingestellt, die Mischung auf die gewünschte Reaktionstemperatur (35° bis 50°C, in den Beispielen 22 bis 23 25° bis 35°C) erwärmt, ca. 20% der zu dosierenden Menge Vinylchlorid/Vinylacetat einemulziert und Ethylen auf ca. 50 bar (bei den Versuchen 1 bis 20 auf 35 bis 45 bar) aufgedrückt. Durch Zudosierung einer Formaldehydnatriumsulfoxylat-Lösung wurde die Polymerisation gestartet und gesteuert. Zirka $1/2$ Stunde nach Reaktionsbeginn wurde die Monomerdosierung eingefahren, die je nach Kühlleistung des verwendeten Autoklaven auf 4 bis 9 Stunden ausgelegt war. Der Ethylendruck wurde während dieser Zeit auf dem gewünschten, anfangs eingestellten Druck gehalten.

Beispiele 26 bis 31

Allgemeine Herstellung der Dispersionen in den Beispielen 26 bis 31

In das vorgelegte Wasser wurden die Polyvinylalkohollösung, die in der Tabelle angegebenen, nichtionogenen Emulgatoren, die gesamten Monomeren und das Oxidationsmittel (t-Butylhydroperoxid, ca. 0,15% auf Dispersion) eingerührt, auf 45 bis 60°C (50°C) erwärmt und die Polymerisation mit Formaldehydnatriumsulfoxylat gestartet und gesteuert. Während der Polymerisation fiel der Druck von ca. 2 bar auf 0 ab. Dann wurde noch bis zu einem konstanten Festgehalt 1 bis 2 h nachpolymerisiert. Während der Polymerisation betrug der pH-Wert ca. 5 bis 6. Am Ende wurden zur Auspolymerisation t-Butylhydroperoxid (ca. 0,05% auf Dispersion) eingerührt und die weiteren, in der Tabelle angegebenen Zusätze eindosiert.

| Beispiel Nr. | Zusammensetzung der Dispersion | | | | |
|---|---|---|---|---|---|
| | VC | VAc | E | VL[15]) | INV[15]) |
| | ca. %[2]) | ca. %[2]) | ca. %[2]) | ca. %[2]) | ca. %[2]) |
| 1 vgl. | 25 | 62 | 13 | – | – |
| 2 vgl. | 25 | 62 | 13 | – | – |
| 3 vgl. | 25 | 62 | 13 | – | – |
| 4 vgl. | 25 | 62 | 13 | – | – |
| 5 vgl. | 25 | 62 | 13 | – | – |
| 6 vgl. | 25 | 62 | 13 | – | – |
| 7 vgl. | 25 | 62 | 13 | – | – |
| 8 vgl. | 25 | 62 | 13 | – | – |
| 9 vgl. | 25 | 62 | 13 | – | – |
| 10 | 25 | 62 | 13 | – | – |
| 11 | 25 | 62 | 13 | – | – |

Fortsetzung

| Beispiel Nr. | Zusammensetzung der Dispersion | | | | |
|---|---|---|---|---|---|
| | VC | VAc | E | VL[15] | INV[15] |
| | ca. %[2] | ca. %[2] | ca. %[2] | ca. %[2] | ca. %[2] |
| 12 | 25 | 62 | 13 | – | – |
| 13 | 25 | 62 | 13 | – | – |
| 14 vgl. | 25 | 62 | 13 | – | – |
| 15 vgl. | 25 | 62 | 13 | – | – |
| 16 | 24 | 60 | 16 | – | – |
| 17 | 26 | 61 | 13 | – | – |
| 18 vgl. | 26 | 63 | 11 | – | – |
| 19 | 26 | 63 | 11 | – | – |
| 20 | 26 | 60 | 14 | – | – |
| 21 | 48 | 32 | 20 | – | – |
| 22 | 67 | 13 | 20 | – | – |
| 23 | 67 | 13 | 20 | – | – |
| 24 | 67 | 16 | 17 | – | – |
| 25 | 69 | 13 | 18 | – | – |
| 26 vgl. | 25 | 50 | – | 25 | – |
| 27 vgl. | 25 | 50 | – | 25 | – |
| 28 | 25 | 50 | – | 25 | – |
| 29 vgl. | 20 | 40 | – | – | 40 |
| 30 vgl. | 20 | 40 | – | – | 40 |
| 31 | 20 | 40 | – | – | 40 |

| Beispiel Nr. | Zusammensetzung der Dispersion | | | | | |
|---|---|---|---|---|---|---|
| | PVAl | | | | Emulgator[1] | EO-PO-Copo |
| | Type[4] | %[3] | Type[4] | %[3] | %[3] | %[3] |
| 1 vgl. | 28/60 | 5 | 13/140 | 1 | 2 | – |
| 2 vgl. | 28/60 | 5 | 13/140 | 1 | 2 | – |
| 3 vgl. | 28/60 | 5 | 13/140 | 1 | 2 | – |
| 4 vgl. | 28/60 | 5 | 13/140 | 1 | 2 | – |

5

Fortsetzung

| Beispiel Nr. | Zusammensetzung der Dispersion | | | | Emulgator[1] | EO-PO-Copo |
|---|---|---|---|---|---|---|
| | PVAI | | | | | |
| | Type[4] | %[3] | Type[4] | %[3] | %[3] | %[3] |
| 5 vgl. | 28/60 | 5 | 13/140 | 1 | 2 | − |
| 6 vgl. | 28/60 | 5 | 13/140 | 1 | 2 | − |
| 7 vgl. | 28/60 | 5 | 13/140 | 1 | 2 | 2[7] |
| 8 vgl. | 28/60 | 5 | 13/140 | 1 | 2 | 2[7] |
| 9 vgl. | 28/60 | 5 | 13/140 | 1 | 2 | 2[7] |
| 10 | 28/60 | 5 | 13/140 | 1 | 2 | − |
| 11 | 28/60 | 5 | 13/140 | 1 | 2 | − |
| 12 | 28/60 | 5 | 13/140 | 1 | 2 | − |
| 13 | 28/60 | 5 | 13/140 | 1 | 2 | − |
| 14 vgl. | 28/60 | 5 | 13/140 | 1 | 2 | − |
| 15 vgl. | 28/60 | 5 | 13/140 | 1 | 2 | − |
| 16 | 28/60 | 3.5 | 13/140 | 2.5 | 2 | − |
| 17 | 28/60 | 5 | 13/140 | 1 | 2 | − |
| 18 vgl. | 28/60 | 3.5 | 13/140 | 2.5 | − | − |
| 19 | 28/60 | 3.5 | 13/140 | 2.5 | − | − |
| 20 | 7/140 | 7 | − | − | − | − |
| 21 | 5/196 | 5 | 13/140 | 2 | 2.3 | − |
| 22 | 5/200 | 6 | − | − | 2 | − |
| 23 | 5/200 | 6 | − | − | 2 | − |
| 24 | 5/200 | 6 | − | − | − | − |
| 25 | 6/65 | 6 | − | − | − | − |
| 26 vgl. | 28/60 | 3.3 | − | − | 2.3 | 1[16] |
| 27 vgl. | 28/60 | 3.3 | − | − | 2.3 | 1[16] |
| 28 | 28/60 | 3.3 | − | − | 2.3 | 1[16] |
| 29 vgl. | 28/60 | 5 | − | − | − | − |
| 30 vgl. | 28/60 | 5 | − | − | − | − |
| 31 | 28/60 | 5 | − | − | − | − |

| Beispiel Nr. | phys. Eigenschaften d. Disp. | | | Nachträgliche Zusätze zur Dispersion | |
|---|---|---|---|---|---|
| | FG | Viskosität[17] | MFT | Silikonöl | EO-PO-Copo |
| | % | m Pa · s | °C | %[3] | %[3] |
| 1 vgl. | 48.2 | 1120 | 5 | 0.8[5] | — |
| 2 vgl. | 48.2 | 1120 | 5 | 0.4[5] | — |
| 3 vgl. | 48.2 | 1120 | 5 | 0.4[5] | 2[6][7] |
| 4 vgl. | 48.2 | 1120 | 5 | 0.2[5] | 2[6][7] |
| 5 vgl. | 48.2 | 1120 | 5 | 0.4[5] | 2[8][7] |
| 6 vgl. | 48.2 | 1120 | 5 | 0.4[9] | 2[8][7] |
| 7 vgl. | 50.2 | 1200 | 6 | 0.4[9] | — |
| 8 vgl. | 49.8 | 950 | 4 | 0.4[10] | — |
| 9 vgl. | 50.2 | 1200 | 6 | 0.4[5] | — |
| 10 | 48.2 | 1120 | 5 | 0.4[9] | 2[6][7] |
| 11 | 48.2 | 1120 | 5 | 0.2[9] | 1[6][7] |
| 12 | 48.2 | 1120 | 5 | 0.4[9] | 2[6][11] |
| 13 | 48.2 | 1120 | 5 | 0.4[9] | 2[6][12] |
| 14 vgl. | 48.2 | 1120 | 5 | 0.4[9] | 2[6][13] |
| 15 vgl. | 48.2 | 1120 | 5 | 0.4[9] | 2[6][14] |
| 16 | 50 | 1450 | 1 | 0.2[9] | 1[6][7] |
| 17 | 50.5 | 1950 | 7.5 | 0.4[9] | 2[6][7] |
| 18 vgl. | 50 | 4500 | 11 | 0.4[5] | — |
| 19 | 50 | 4500 | 11 | 0.4[9] | 2[6][7] |
| 20 | 51 | 950 | 14 | 0.4[9] | 2[6][7] |
| 21 | 51.8 | 1020 | 15 | 0.4[9] | 2[6][7] |
| 22 | 50.2 | 1830 | 21 | 0.2[9] | 1[6][7] |
| 23 | 50.2 | 1830 | 21 | 0.2[9] | 0.2[6][7] |
| 24 | 50.5 | 1350 | 30 | 0.2[9] | 1[6][7] |
| 25 | 50 | 630 | 28 | 0.4[9] | 2[6][7] |
| 26 vgl. | 51.9 | 510 | 16 | 0.4[5] | — |
| 27 vgl. | 51.9 | 510 | 16 | 0.4[9] | — |

Fortsetzung

| Beispiel Nr. | phys. Eigenschaften d. Disp. | | | Nachträgliche Zusätze zur Dispersion | |
|---|---|---|---|---|---|
| | FG | Viskosität[17] | MFT | Silikonöl | EO-PO-Copo |
| | % | m Pa · s | °C | %[3] | %[3] |
| 28 | 51.9 | 510 | 16 | 0.4[9] | 2[6) 7] |
| 29 vgl. | 51.4 | 2920 | 24.5 | 0.4[9] | – |
| 30 vgl. | 51.4 | 2920 | 24.5 | 0.4[5] | – |
| 31 | 51.4 | 2920 | 24.5 | 0.4[9] | 2[6) 7] |

| Beispiel Nr. | Nach 30′ Scheren der Dispersion und 15′ Rühren des Mörtels | |
|---|---|---|
| | Ausbreitmaß cm nach DIN 1164 | Luftporengehalt % |
| 1 vgl. | 17.5 | 21 |
| 2 vgl. | 17.5 | 23 |
| 3 vgl. | 17 | 8.5 |
| 4 vgl. | 17 | 16 |
| 5 vgl. | 18 | 13.5 |
| 6 vgl. | 18 | 21 |
| 7 vgl. | 18.5 | 24 |
| 8 vgl. | 19 | 26 |
| 9 vgl. | 18 | 18 |
| 10 | 18 | 2.8 |
| 11 | 17.5 | 4.9 |
| 12 | 18.5 | 4.8 |
| 13 | 18 | 5.1 |
| 14 vgl. | 19 | 25 |
| 15 vgl. | 18.5 | 26 |
| 16 | 18.5 | 4.6 |
| 17 | 18 | 2.4 |
| 18 vgl. | 14 | 10.8 |
| 19 | 16.5 | 3.5 |

Fortsetzung

| Beispiel Nr. | Nach 30' Scheren der Dispersion und 15' Rühren des Mörtels | |
| --- | --- | --- |
| | Ausbreitmaß cm nach DIN 1164 | Luftporengehalt % |
| 20 | 17.5 | 4.3 |
| 21 | 17.5 | 4.8 |
| 22 | 17 | 3.3 |
| 23 | 18 | 4 |
| 24 | 17 | 3 |
| 25 | 16.5 | 3.5 |
| 26 vgl. | 19 | 9 |
| 27 vgl. | 18 | 21 |
| 28 | 18.5 | 3.5 |
| 29 vgl. | 19 | 20 |
| 30 vgl. | 19 | 14.5 |
| 31 | 17.5 | 4.9 |

[1]) Isotridecanol, mit 15 Ethylenoxideinheiten verethert.
[2]) %-Angaben auf Monomeres.
[3]) %-Angaben auf Harz.
[4]) Die erste Zahl bedeutet die Höppler-Viskosität einer 4prozentigen Lösung in mPa · s, die zweite Zahl ist die Verseifungszahl.
[5]) Reiner Silikonentschäumer in Form einer 20prozentigen Emulsion (mit ca. 6% hochdisperser Kieselsäure).
[6]) Vor der Zugabe mit dem Silikonentschäumer vermischt.
[7]) Ethylenoxid-Propylenoxid-Blockcopolymeres mit 20% Ethylenoxideinheiten.
[8]) Vor der Zugabe nicht mit dem Silikonentschäumer vermischt.
[9]) Reiner Silikonentschäumer (mit ca. 6% hochdisperser Kieselsäure).
[10]) Vermischt mit dem EO-PO-Copolymeren, Emulgator vor der Polymerisation zugegeben.
[11]) Ethylenoxid-Propylenoxid-Blockcopolymeres mit 10% Ethylenoxideinheiten.
[12]) Ethylenoxid-Propylenoxid-Blockcopolymeres mit 60% Ethylenoxideinheiten.
[13]) Ethylenoxid-Copolymeres; Molgewicht ca. 2000.
[14]) Propylenoxid-Copolymeres; Molgewicht ca. 2000.
[15]) VL = Vinyllaurat.
    INV= Isononansäurevinylester.
[16]) Ethylenoxid-Propylenoxid-Blockcopolymeres mit 40% Ethylenoxideinheiten.
[17]) Viskosität bestimmt mit einem Epprecht Rheometer STV C III
    vgl. = Vergleichsversuch.

**Patentansprüche**

    1. Zusatzmittel zur Herstellung von porenarmen, kunststoffhaltigen, hydraulisch abbindenden Massen, bestehend aus wäßriger Kunststoffdispersion und Entschäumer auf Basis von Polysiloxan und flammhydrolysiertem Siliciumdioxid, dadurch gekennzeichnet, daß das Zusatzmittel eine Mischung ist aus

a) wäßrigen Copolymerdispersionen mit einem Feststoffgehalt zwischen 30 und 65 Gew.-% und einer Glasübergangstemperatur des Harzes zwischen −10 und +40°C bei einem K-Wert von 35 bis 80, wobei die Copolymerdispersionen aus Monomereinheiten von Vinylchlorid und Vinylacetat und einem oder mehreren weiteren Monomeren aus der Gruppe Ethylen, Vinylester verzweigter oder unverzweigter Carbonsäuren mit 8 bis 18 Kohlenstoffatomen, Acrylester mit aliphatischen Alkoholen mit 3 bis 8 Kohlenstoffatomen, durch radikalische Polymerisation in Gegenwart üblicher Schutzkolloide in Mengen von 1,5 bis 5 Gew-% und nichtionogener Emulgatoren in Mengen von 0 bis 3 Gew.-%, jeweils bezogen auf Dispersion, hergestellt wurden, und

b) 0,3 bis 3 Gew.-%, bezogen auf Dispersion, Entschäumer, bestehend aus

| | |
|---|---|
| 5 bis 50 Teilen | eines Dimethylpolysiloxans mit 50 bis 1000 mPa·s, |
| 1 bis 10 Teilen | flammhydrolysiertem Siliciumdioxid sowie |
| 50 bis 95 Teilen | eines Ethylenoxid-Propylenoxid-Blockcopolymeren mit einem Molekulargewicht von 500 bis 10 000 und 10 bis 60 Gew.-% Ethylenoxid im Blockcopolymeren (hierbei ergänzen sich Polysiloxan und Blockcopolymer zu 100 Teilen), |

wobei Entschäumer und Copolymerdispersion vor der Zugabe zum hydraulisch abbindenden Material miteinander vermischt werden.

2. Verwendung des Zusatzmittels nach Anspruch 1 in Mengen von 1 bis 50 Gew.-%, bezogen auf das hydraulische Bindemittel, in hydraulisch abbindenden Massen.

## Claims

1. Additive for the manufacture of pore-free hydraulically setting compositions containing plastics material, consisting of an aqueous plastics dispersion and an antifoaming agent based on polysiloxanes and flamehydrolysed silica, characterised in that the additive is a mixture comprising

a) an aqueous copolymer dispersion having a solids content of between 30 and 65% by weight and a glass transition temperature of the resin of between −10 and +40°C at a K value of from 35 to 80, wherein the copolymer dispersions have been manufactured from monomer units of vinyl chloride and vinyl acetate and one or several further monomers selected from the group consisting of ethylene, vinyl esters of branched or unbranched carboxylic acids having from 8 to 18 carbon atoms, and acryl esters with aliphatic alcohols having from 3 to 8 carbon atoms, by radical polymerisation, in the presence of conventional protective colloids in quantities of from 1.5 to 5% by weight and in the presence of non-ionic emulsifiers in quantities of from 0 to 3% by weight, based on the dispersion in each case, and

b) from 0.3 to 3% by weight, based on the dispersion, of an antifoaming agent consisting of

| | |
|---|---|
| from 5 to 50 parts | of a dimethylpolysiloxane having a viscosity of from 50 to 1000 mPa·s, |
| from 1 to 10 parts | of flame-hydrolysed silica, and |
| from 50 to 95 parts | of an ethylene oxide/propylene oxide block copolymer having a molecular weight of from 500 to 10 000 with from 10 to 60% by weight of ethylene oxide in the block copolymer (in this case, the polysiloxane and the block copolymer together make up 100 parts), |

the antifoaming agent and the copolymer dispersion being mixed with each other before being added to the hydraulically setting material.

2. Use of the additive according to claim 1 in quantities of from 1 to 50% by weight, based on the hydraulic binder, in hydraulically setting compositions.

## Revendications

1. Additif pour la préparation de matières hydrauliques (faisant prise dans l'eau) ayant peu de pores, contenant des matières plastiques, constitué d'une dispersion aqueuse de matière plastique et d'un agent antimousse à base de polysiloxane et de silice d'hydrolyse à la flamme, et caractérisé en ce qu'il comprend un mélange:

a) de dispersions aqueuses ayant une teneur en matières solides comprise entre 30 et 65% en poids et une température de transition vitreuse de la résine comprise entre −10 et +40°C pour une valeur K de 35 à 80, les dispersions de copolymères étant préparées à partir de motifs monomères chlorure de vinyle et acétate de vinyle et d'un ou plusieurs autres monomères choisis parmi l'éthyléne, des esters vinyliques d'acides carboxyliques ramifiés ou non ramifiés en $C_8$ à $C_{18}$, des esters acryliques avec des alcools aliphatiques en $C_3$ à $C_8$ par polymérisation radicalaire en présence de colloides protecteurs usuels à raison de 1,5 à 5% en poids et d'émulsionnants non ioniques à raison de 0 à 3% en poids, par rapport à la dispersion, et

b) de 0,3 à 3% en poids, par rapport à la dispersion, d'un agent antimousse, constitué de:

5 à 50 parties d'un polydiméthylsiloxane ayant une viscosité de 50 à 1000 mPa·s,

1 à 10 parties en poids de silice d'hydrolyse à la flamme, et,

50 à 95 parties d'un copolymère séquencé oxyde d'éthyléneoxyde de propylène ayant une masse moléculaire de 500 à 10 000 et 10 à 60% en poids d'oxyde d'éthylène dans le copolymère séquencé (le polysiloxane et le copolymère greffé se complètent ici à100 parties),

l'agent antimousse et la dispersion de copolymère étant mélangés entre eux avant l'addition à la matière faisant prise hydrauliquement.

2. Utilisation de l'additif suivant la revendication 1, à raison de 1 à 50% en poids par rapport au liant faisant prise dans l'eau, dans des matières hydrauliques.